# EUROPÄISCHE PATENTSCHRIFT

(11) **EP 3 947 562 B1**
(45) Veröffentlichungstag und Bekanntmachung des Hinweises auf die Patenterteilung: **08.03.2023**
(21) Anmeldenummer: 20711204.6
(22) Anmeldetag: 20.03.2020
(51) Int. Cl.: C08L 69/00

(54) **GEFÜLLTE POLYCARBONAT-ZUSAMMENSETZUNG MIT GERINGER THERMISCHER AUSDEHNUNG**
FILLED POLYCARBONATE COMPOSITION WITH LOW THERMAL EXPANSION
COMPOSITION DE POLYCARBONATE REMPLIE À EXPANSION THERMIQUE FAIBLE

(30) Priorität: 28.03.2019 EP 19165784
(43) Veröffentlichungstag der Anmeldung: 09.02.2022
(73) Patentinhaber: Covestro Intellectual Property GmbH & Co. KG, 51373 Leverkusen (DE)
(72) Erfinder: HUNGERLAND, Tim, 51061 Köln (DE)
(74) Vertreter: Levpat
(86) Internationale Anmeldenummer: PCT/EP2020/057719
(87) Internationale Veröffentlichungsnummer: WO 2020/193386

(56) Entgegenhaltungen:
- WO-A1-2010/108626
- WO-A1-2019/016369
- US-A1- 2006 287 422
- "Plastics Materials ED - Brydson J A", 1. Januar 1999 (1999-01-01), PLASTICS MATERIALS (7TH ED.), BUTTERWORTH HEINEMANN (REFEREX), PAGE(S) 1 - 920, XP040425298, ISBN: 0-7506-4132-0 Seite 12 - Seite 13; Anspruch 2; Beispiel 2; Tabelle 1 Seite 1, Zeile 2 - Zeile 4 Seite 8, Zeile 30 - Seite 9, Zeile 2 Seite 3, Zeile 6 - Zeile 8 Seite 7, Zeile 24 - Seite 8, Zeile 19

## Beschreibung

Die vorliegende Erfindung betrifft eine thermoplastische Zusammensetzung, umfassend: A) aromatisches Polycarbonat und B) Ba) Verstärkungsfasern und/oder Bb) sphärische Partikel von Oxiden von Metallen oder Halbmetallen der 3. Hauptgruppe, 4. Hauptgruppe und/oder 4. Nebengruppe. Sie betrifft weiterhin eine Schichtenanordnung, umfassend eine Substratschicht und eine von der Substratschicht verschiedene, die Substratschicht wenigstens teilweise bedeckende Reflexionsschicht, wobei die Reflexionsschicht Licht im Wellenlängenbereich von 380 nm bis 750 nm wenigstens teilweise reflektiert, eine Beleuchtungsvorrichtung, umfassend eine Lichtquelle und einen Reflektor, wobei der Reflektor so angeordnet ist, dass wenigstens ein Teil des von der Lichtquelle ausgesandten Lichts von dem Reflektor reflektiert wird und ein Verfahren zur Herstellung eines Formkörpers.

Für die Herstellung von Trägern für optische Elemente wie zum Beispiel Reflexionsflächen oder Linsen sind von (Co)-Polycarbonat-Zusammensetzungen von Interesse, da sie sich im Spritzgussverfahren verarbeiten lassen. In solchen Anwendungen ist die Dimensionsstabilität der Bauteile von besonderer Bedeutung, um nicht durch thermische Ausdehnung während des Betriebes sorgsam entwickelte optische Eigenschaften des Systems zunichte zu machen. Das Trägermaterial sollte eine geringe und gleichzeitig möglichst isotrope thermische Ausdehnung (coefficient of linear thermal expansion, CLTE) aufweisen. Dieses kann durch sphärische Füllstoffe erreicht werden.

Eine weitere Klasse von Füllstoffen in hochgefüllten Polycarbonatsystemen sind Verstärkungsfasern. Hierdurch können dem Material weiter vorteilhafte mechanische Eigenschaften verliehen werden. Das thermische Verhalten ist wünschenswerterweise derart, dass eine reduzierte Verformung in einer oder zwei Dimensionen erfolgt. Anwendungen für solche verstärkten Polycarbonatsysteme sind unter anderem Leichtbau-Gehäuse für elektronische Bauteile.

Weiterhin sollte das Trägermaterial eine gute Verarbeitungsstabilität aufweisen, damit dessen vorteilhafte Eigenschaften nicht durch einen Spritzgussprozess reduziert werden.

WO 2019/016369 A1 beschreibt Polycarbonat-Zusammensetzungen mit niedrigen thermischen Ausdehnungskoeffizienten, enthaltend 20 Gew.-% Jetfine 3CA Talk (Mg₃Si₄O₁₀(OH)₂) und den Phosphit-Stabilisator Irganox B900. Das Dokument offenbart nicht, dass ein sphärischer Füllstoff enthalten ist und damit auch nicht seine Menge. Auch die Anwesenheit von PMMI ist nicht beschrieben.

US 2006/287422 A1 beschreibt einen mineralischen Füllstoff - etwa Talk, Glimmer oder Wollastonit - enthaltende Polycarbonat-Zusammensetzungen mit verbesserten mechanischen Eigenschaften. Die Anwesenheit von PMMI ist nicht beschrieben.

In "Plastics Materials ED - Brydson J A2, 1. Januar 1999 (1999-01-01), Plastics Materials (7th Ed.), Butterworth Heinemann, S. 1-920, XP040425298, ISBN 0-7506-4132-0 beschreibt (Co)polycarbonat-Zusammensetzungen, die sich durch eine gute Fließfähigkeit und hohe Wärmeformbeständigkeit auszeichnen. Es sind konkret Zusammensetzungen beschrieben, die 99,9 Gew.-% Copolycarbonat aus Bisphenol TMC und BPA sowie 0,1 Gew.-% Pleximid 8813, ein PMMI, enthalten. Das Dokument beschreibt nicht die Anwesenheit größerer Mengen Pleximid und offenbart auch keine entsprechenden verstärkten Zusammensetzungen, die entweder Verstärkungsfasern oder sphärische Metall- bzw. Halbmetalloxide enthalten. Ferner ist kein Phosphin- oder Phosphitstabilisator enthalten.

WO 2010/108626 A1 beschreibt Copolycarbonat-Zusammensetzungen mit verbesserten optischen Eigenschaften, guter Fließfähigkeit und hoher Wärmeformbeständigkeit, wobei die Zusammensetzungen PMMI enthalten. Verstärkungsfasern sowie Phosphit-Stabilisatoren sind als optionale Komponenten beschrieber

WO 2013/079555 A1 offenbart thermoplastische Formkörper mit einer hohen Oberflächengüte sowie thermoplastische Formmassen und ein Verfahren zur Herstellung der Formkörper. Die thermoplastische Zusammensetzungen enthalten: A) 30,0 bis 100,0 Gew.-Teile mindestens eines aromatischen Polycarbonats; B) 0,0 Gew.-Teile bis 50,0 Gew.-Teile. kautschukmodifiziertes Pfropfpolymerisat und/oder Vinylcopolymerisat; C) 0,00 bis 50,00 Gew.-Teile Polyester; D) 5,0 bis 50,0 Gew.-Teile mindestens eines anorganischen Füllstoffs mit einer Komgestalt ausgewählt aus der Gruppe, die sphärische/kubische, tubular/diskusförmige und plattige Geometrien umfasst und E) 0,00 bis 5,00 Gew.-Teile weitere übliche Additive, wobei die Summe der Gewichtsteile der Komponenten A) bis E) sich zu 100 Gewichtsteilen addiert.

Die internationale Patentanmeldung mit dem Aktenzeichen PCT/EP2018/084599 und einem Prioritätsdatum vom 20. Dezember 2017, inzwischen veröffentlicht als WO 2019/121253 A1, betrifft die Verwendung mindestens eines PMMI-Copolymers zur Reduzierung des Molekulargewichtsabbaus von aromatischem Polycarbonat bei Talk-haltigen Polycarbonat-Zusammensetzungen beim Compoundieren. Eine beanspruchte Zusammensetzung besteht aus: A) mindestens 68 Gew.-% aromatischem Polycarbonat; B) 10 bis 30 Gew.-% Talk; C) 0,2 bis 6 Gew.-% PMMI-Copolymer und D) optional einem oder mehreren weiteren Additiven, ausgewählt aus der Gruppe, bestehend aus Flammschutzmitteln, Antitropfmitteln, Schlagzähmodifikatoren, von Komponente B verschiedenen Füllstoffen, Antistatika, Farbmitteln, Pigmenten, Ruß, Gleit- und/oder Entformungsmitteln, Thermostabilisatoren, Blendpartnern, Verträglichkeitsvermittlern, UV-Absorbern und/oder IR-Absorbern. Der Einsatz von Phosphitstabilisatoren wird hier jedoch nicht beschrieben.

Die internationale Patentanmeldung mit dem Aktenzeichen PCT/EP2018/084543 und einem Prioritätsdatum vom 20. Dezember 2017, inzwischen veröffentlicht als WO 2019/121229 A1, betrifft die Verwendung mindestens eines PMMI-Copolymers zur Reduzierung des Molekulargewichtsabbaus von aromatischem Polycarbonat bei Polycarbonat-Zusammensetzungen, enthaltend ein oder mehrere Oxide von Metallen oder Halbmetallen der 3. Hauptgruppe, 4. Hauptgruppe und/oder 4. Nebengruppe, beim Compoundieren. Eine beanspruchte Zusammensetzung besteht aus: A) mindestens 60 Gew.-% aromatischem Polycarbonat; B) 10 bis 30 Gew.-% einem oder mehreren Oxiden von Metallen oder Halbmetallen der 3. oder 4. Hauptgruppe oder 4. Nebengruppe; C) 0,2 bis 6 Gew.-% PMMI-Copolymer und D) optional einem oder mehreren von den Komponenten B und C verschiedenen, weiteren Additiven, ausgewählt aus der Gruppe, bestehend aus Flammschutzmitteln, Antitropfmitteln, Schlagzähmodifikatoren, Füllstoffen, Antistatika, Farbmitteln, Pigmenten, Ruß, Gleit- und/oder Entformungsmitteln, Thermostabilisatoren, Blendpartnern, Verträglichkeitsvermittlem, UV-Absorbern und/oder IR-Absorbern. Auch hier wird kein Einsatz von Phosphitstabilisatoren beschrieben.

Die vorliegende Erfindung hat sich die Aufgabe gestellt, thermoplastische Formmassen mit hohem Gehalt an sphärischen Füllstoffen oder Verstärkungsfasern (je nach gewünschtem thermischen Ausdehnungsverhalten) bereitzustellen, welche auch nach zweimaliger thermischer Belastung - Compoundieren und Spritzgießen - einen möglichst geringen Molekulargewichtsabbau aufweisen. Dies gilt insbesondere für, bezogen auf Polycarbonat, außerordentlich hohe Schmelzetemperaturen im Spritzguss, insbesondere bei 280°C bis 300°C, bevorzugt 290°C bis 300°C, ggf. auch bei 330 bis 350°C, die die Verarbeitung der hochgefüllten Formmassen erleichtern. Weiterhin hat sie sich die Aufgabe gestellt, auf diesen Formmassen basierende Folgeprodukte und entsprechende Herstellungsverfahren bereitzustellen.

Erfindungsgemäß gelöst wird die Aufgabe durch eine thermoplastische Zusammensetzung umfassend:
A) aromatisches Polycarbonat und
B)
   Ba) Verstärkungsfasern
      und/oder
   Bb) sphärische Partikel von Oxiden von Metallen oder Halbmetallen der 3. Hauptgruppe, 4. Hauptgruppe und/oder 4. Nebengruppe,
**dadurch gekennzeichnet, dass**
die Zusammensetzung weiterhin umfasst:
   C) PMMI-Copolymer und
   D) Phosphit-Stabilisator und/oder Phosphin-Stabilisator,
wobei weiterhin der Anteil an B) ≥ 35 Gewichts-% bis ≤ 60 Gewichts-% und der Anteil an C) > 0,1 Gewichts-%, jeweils bezogen auf das Gesamtgewicht der Zusammensetzung, beträgt.

Diese kann Bestandteil einer Schichtenanordnung sein, wobei die Schichtenanordnung eine Substratschicht umfassend eine solche Zusammensetzung und eine von der Substratschicht verschiedene, die Substratschicht wenigstens teilweise bedeckende Reflexionsschicht umfasst, wobei die Reflexionsschicht Licht im Wellenlängenbereich von 380 nm bis 750 nm wenigstens teilweise reflektiert. Solch eine Schichtenanordnung kann Bestandteil einer Beleuchtungsvorrichtung, umfassend eine Lichtquelle und einen Reflektor, wobei der Reflektor so angeordnet ist, dass wenigstens ein Teil des von der Lichtquelle ausgesandten Lichts von dem Reflektor reflektiert wird, sein, wobei der Reflektor vorbeschriebene Schichtenanordnung enthält. Ein Herstellungsverfahren gemäß Anspruch 15 setzt die erfindungsgemäße Zusammensetzung ein. Ein solches Herstellungsverfahren dient der Herstellung eines Formkörpers, wobei eine thermoplastische Zusammensetzung unter Einwirkung von Wärme zu dem Formkörper geformt wird. Vorteilhafte Weiterbildungen sind in den Unteransprüchen enthalten. Sie können beliebig kombiniert werden, sofern sich aus dem Kontext nicht eindeutig das Gegenteil ergibt.

Es hat sich überraschenderweise gezeigt, dass in Polycarbonat-Zusammensetzungen mit hohem Gehalt an sphärischen Füllstoffen und/oder Verstärkungsfasern die Verarbeitungsstabilität auch während eines auf das Compoundieren folgenden Spritzguss-Schrittes erhöht werden kann, wenn eine Kombination aus PMMI-Copolymer mit einem bestimmten Mindestgehalt sowie einem Phosphor-haltigen Stabilisator, ausgewählt aus der Gruppe Phosphit-Stabilisator und/oder Phosphin-Stabilisator, enthalten ist.

Als Kriterium für eine gute Verarbeitungsstabilität von Polycarbonat-Homopolymeren kann insbesondere dienen, wenn das zahlenmittlere Molekulargewicht Mw des Polycarbonats vor der Compoundierung (zur Herstellung der füllstoffhaltigen Formmassen), aber vor dem Spritzgießen um weniger als 5% gegenüber dem Ausgangszustand verringert ist und gleichzeitig nach dem Spritzgießen um weniger als 7% gegenüber dem Ausgangszustand verringert ist.

Bei Polycarbonat-Copolymeren wie zum Beispiel Copolycarbonaten auf Basis der Monomere Bisphenol A und 1,1-Bis-(4-hydroxyphenyl)-3,3,5-trimethylcyclohexan ändert sich das zweite Kriterium auf "vor dem Spritzgießen um weniger als 10% gegenüber dem Ausgangszustand verringert".

### Komponente A

Bei Komponente A handelt es sich um mindestens ein aromatisches Polycarbonat. Als Komponente A können somit auch Mischungen eingesetzt werden. Polycarbonate im Sinne der vorliegenden Erfindung sind sowohl Homopolycarbonate als auch Copolycarbonate; die Polycarbonate können in bekannter Weise linear oder verzweigt sein. Die Herstellung der Polycarbonate erfolgt in bekannter Weise aus Dihydroxyarylverbindungen, Kohlensäurederivaten, gegebenenfalls Kettenabbrechern und Verzweigern.

Bevorzugte Dihydroxyarylverbindungen sind ausgewählt aus mindestens einem aus der Gruppe 4,4'-Dihydroxybiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, und 1,1-Bis-(4-hydroxyphenyl)-3 , 3, 5-trimethylcyclohexan.

Geeignete Kohlensäurederivate sind beispielsweise Phosgen oder Diphenylcarbonat. Geeignete Kettenabbrecher, die bei der Herstellung der erfindungsgemäß verwendeten Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen. Geeignete Verzweiger sind die in der Polycarbonatchemie bekannten tri- oder mehr als trifunktionellen Verbindungen, insbesondere solche mit drei oder mehr als drei phenolischen OH-Gruppen.

Bevorzugt ist das Polycarbonat A) das Homopolycarbonat auf Basis von Bisphenol A, das Homopolycarbonat auf Basis von 1,1-Bis-(4-hydroxyphenyl)-3,3,5-trimethylcyclohexan, ein Copolycarbonat auf Basis der Monomere Bisphenol A und 1,1-Bis-(4-hydroxyphenyl)-3,3,5-trimethylcyclohexan oder eine Mischung aus wenigstens zwei der vorgenannten Polymere.

### Komponente B

Erfindungsgemäß enthalten die Zusammensetzungen als Komponente Ba Verstärkungsfasern und/oder als Komponente Bb mindestens ein Oxid eines Metalls oder Halbmetalls der 3. oder 4. Hauptgruppe oder 4. Nebengruppe. Geeignete Verstärkungsfasern sind beispielsweise Glasfasern oder Carbonfasern oder deren Mischungen. Die Fasern weisen bevorzugt eine Schnittlänge von ≥ 2 mm bis ≤ 5 mm und/oder ein Querschnittsverhältnis von ≥ 1: 1 bis ≤ 2:1 auf.

Die Oxide eines Metalls oder Halbmetalls der 3. oder 4. Hauptgruppe oder 4. Nebengruppe können alleine oder in Mischung eingesetzt werden. Bevorzugt werden Titandioxid, Siliciumdioxid und/oder Aluminiumoxid, besonders bevorzugt Titandioxid und/oder Siliciumdioxid, ganz besonders bevorzugt Titandioxid, insbesondere ohne weitere Oxide eines Metalls oder Halbmetalls der 3. oder 4. Hauptgruppe oder 4. Nebengruppe, von Beschichtungen des Titandioxids und/oder Siliciumdioxids abgesehen, eingesetzt. Bevorzugt ist Komponente Bb also aus dieser vorstehend genannten limitierten Gruppe ausgewählt.

Komponente B ist die Gesamtheit der Anteile der Komponenten Ba und Bb. In Komponente B können Ba alleine, Bb alleine oder eine Mischung aus Ba und Bb vorliegen. Vorzugsweise ist die Komponente B ist in den erfindungsgemäßen Zusammensetzungen in einer Menge von ≥ 36 bis ≤ 55 Gew.-%, weiter bevorzugt von ≥ 37 bis ≤ 50 Gew.-%, noch weiter bevorzugt von ≥ 38 bis ≤ 45 Gew.-%, besonders bevorzugt von ≥ 39 bis ≤ 40 Gew, jeweils bezogen auf die Gesamtzusammensetzung, enthalten.

Das Siliciumdioxid ist bevorzugt natürlich vorkommendes oder synthetisch hergestelltes Quarz sowie Quarzglas.

Die in erfindungsgemäßen Zusammensetzungen verwendeten Partikel weisen eine sphärische Komgestalt auf. "Sphärisch" bedeutet hierbei neben einer idealen Kugelgestalt auch, dass wenn die Partikel durch von einem gemeinsamen Ursprung ausgehende, in den Raum gerichtete Achsen gleicher Länge beschrieben werden, wobei die Achsen den Radius der Partikel in alle Raumrichtungen definieren, eine Abweichung der Achsenlängen vom Idealzustand einer Kugel unabhängig voneinander von bis zu 20% (vorzugsweise bis zu 10%) möglich ist.

Die Quarze sind bevorzugt durch einen mittleren Durchmesser dso, bestimmt nach ISO 13320:2009, von 2 bis 10 µm, weiter bevorzugt von 2,5 bis 8,0 µm, noch weiter bevorzugt von 3 bis 5 µm gekennzeichnet, wobei ein oberer Durchmesser d₉₅, bestimmt nach ISO 13320:2009, von entsprechend 6 bis 34 µm, weiter bevorzugt von 6,5 bis 25,0 µm, noch weiter bevorzugt von 7 bis 15 µm, und besonders bevorzugt von 10 µm bevorzugt ist.

Bevorzugt weisen die Quarze eine spezifische BET-Oberfläche, bestimmt durch Stickstoffadsorption gemäß ISO 9277:2010, von 0,4 bis 8,0 m²/g, weiter bevorzugt von 2 bis 6 m²/g, und besonders bevorzugt von 4,4 bis 5,0 m²/g auf.

Weiter bevorzugte Quarze weisen nur maximal 3 Gew.-% Nebenbestandteile auf, wobei vorzugsweise der Gehalt an Al₂O₃ < 2,0 Gew.-%, Fe₂O₃ < 0,05 Gew.-%, (CaO + MgO) < 0,1 Gew.-% und (NazO + K₂O) < 0,1 Gew.-% ist, jeweils bezogen auf das Gesamtgewicht des Quarzes bzw. Silikats.

Bevorzugt werden Quarze mit einem pH-Wert, gemessen gemäß ISO 10390:2005 in wässriger Suspension, im Bereich 6 bis 9, weiter bevorzugt 6,5 bis 8,0 eingesetzt.

Sie weisen bevorzugt eine Ölabsorptionszahl gemäß DIN EN ISO 787-5:1995-10 von bevorzugt 20 bis 30 g/100 g auf.

In bevorzugter Ausführungsform handelt es sich bei Komponente Bb um feinteilige Quarzmehle, die durch eisenfreie Mahlung mit nachfolgender Windsichtung aus aufbereitetem Quarzsand hergestellt wurden.

Besonders bevorzugt wird "fused Silica" als Komponente Bb eingesetzt, wobei es sich um Quarzglas handelt, aufgeschmolzenes und wieder erstarrtes Siliciumdioxid.

Es können Quarze bzw. Quarzglase zum Einsatz kommen, die eine Schlichte an der Oberfläche aufweisen, wobei bevorzugt Epoxy-modifizierte, Polyurethan-modifizierte und nichtmodifizierte Silanverbindungen, Methylsiloxan-, und Methacrylsilan-Schlichten oder Mischungen der vorgenannten Silanverbindungen zum Einsatz kommen. Besonders bevorzugt ist eine Epoxysilanschlichte. Die Beschlichtung von Siliciumdioxid erfolgt nach den allgemeinen, dem Fachmann bekannten Verfahren.

Bevorzugt weist das für erfindungsgemäße Zusammensetzungen eingesetzte Siliciumdioxid jedoch keine Schlichte auf.

Geeignete Titandioxide sind bevorzugt solche, welche nach dem Chlorid-Verfahren hergestellt, hydrophobiert, speziell nachbehandelt und für den Einsatz in Polycarbonat geeignet sind, z. B. das Handelsprodukt Kronos 2230 (Kronos Titan).

Zu möglichen Oberflächenmodifikationen von Titandioxid zählen anorganische und organische Modifikationen. Hierzu zählen z.B. Oberflächenmodifikationen auf Aluminium- oder Polysiloxanbasis. Eine anorganische Beschichtung kann 0 bis 5 Gew.-% Siliciumdioxid und/oder Aluminiumoxid enthalten. Eine Modifikation auf organischer Basis kann 0 bis 3 Gew.-% eines hydrophoben Benetzungsmittels enthalten.

Das Titandioxid hat bevorzugt eine Ölabsorptionszahl, bestimmt nach DIN EN ISO 787-5:1995-10, von 12 bis 18 g/100 g Titandioxid, weiter bevorzugt von 13 bis 17 g/ 100 g Titandioxid, besonders bevorzugt von 13,5 bis 15,5 g/100 g Titandioxid.

Besonders bevorzugt ist Titandioxid mit der Normbezeichnung R2 gemäß DIN EN ISO 591-1:2001-8, Teil 1, welches mit Aluminium- und/oder Siliciumverbindungen stabilisiert ist und einen Titandioxid-Gehalt von mindestens 96,0 Gew.-% aufweist. Derartige Titandioxide sind unter den Markennamen Kronos^{®} 2233 und Kronos^{®} 2230 erhältlich.

Sofern Aluminiumoxid als Komponente Bb eingesetzt wird, hat dieses bevorzugt einen pH-Wert von 7,0 bis 7,4, gemessen gemäß ISO 10390:2005 in wässriger Suspension. Es ist bevorzugt unbeschlichtet.

Die Mengenangabe für Komponente Bb bezieht sich jeweils auf das Gesamtgewicht des eingesetzten Oxids, ggf. inklusive Beschlichtung bzw. Oberflächenmodifizierung.

Bevorzugt wird als Komponente B) Bb) sphärischer Quarz mit einem mittleren Durchmesser dso von ≥ 3 µm bis ≤ 5 µm und einem mittleren Durchmesser d₉₈, jeweils bestimmt nach ISO 13320:2009, von ≥ 10 µm bis ≤ 15 µm eingesetzt und/oder Ba) Glasfasern mit einer Schnittlänge von ≥ 2 mm bis ≤ 5 mm und einem Querschnittsverhältnis von ≥ 1: 1 bis ≤ 2:1.

### Komponente C

Komponente C sind PMMI-Copolymere. Dieses sind thermoplastische Kunststoffe, welche teilweise imidierte Methacrylpolymerisate sind. PMMI-Copolymere werden insbesondere erhalten durch Umsetzung von PMMA mit Methylamin in Dispersion oder in der Schmelze in einem Reaktor. Ein geeignetes Verfahren ist beispielsweise in DE 1 077 872 A1 beschrieben. Dabei werden entlang der Polymerkette Imidstrukturen erzeugt, wobei, je nach Umsetzungsgrad, auch noch Methacrylsäureanhydrid- und freie Methacrylsäure-Funktionalitäten gebildet werden. Der Anteil an Imidfunktionalitäten im Copolymer bestimmt dessen Wärmeformbeständigkeit. Der Umsetzungsgrad ist gezielt einstellbar.

PMMI-Copolymere weisen Methylmethacrylat- (MMA), Methylmethacrylimid- (MMI), Methylmethacrylsäure- (MMS) und Methylmethacrylanhydrid-Einheiten (MMAH) auf. Bevorzugt sind mindestens 90, weiter bevorzugt mindestens 95 Gew.-% des PMMI-Copolymers, bezogen auf das Gesamtgewicht des PMMI-Copolymers, MMA-, MMI-, MMS- und MMAH-Einheiten. Besonders bevorzugt bestehen die PMMI-Copolymere aus diesen Bausteinen.

Die Bausteine und deren Anteile am PMMI-Copolymer können insbesondere mittels quantitativer ¹H-NMR-Spektroskopie, anhand eindeutiger chemischer Verschiebung der R'-Signale, ermittelt werden. Die Aufschlüsselung der Signale der Säure- und Anhydrid-Monomerbausteine ist nicht eindeutig möglich, weshalb eine zusammengefasste Betrachtung dieser Bausteine zu empfehlen ist.

Das PMMI-Copolymer hat bevorzugt einen MMI-Anteil von mindestens 30 Gew.-%, bevorzugt von mindestens 35 Gew.-%, weiter bevorzugt von 35 bis 96 Gew.-%, besonders bevorzugt von 36 bis 95 Gew.-% MMI, bezogen auf das Gesamtgewicht des PMMI-Copolymers.

Der MMA-Anteil des Copolymers beträgt bevorzugt 3 bis 65 Gew.-%, bevorzugt 4 bis 60 Gew.-%, besonders bevorzugt 4,0 bis 55 Gew.-%, bezogen auf das Gesamtgewicht des PMMI-Copolymers.

Der Anteil an MMS und MMAH beträgt in Summe bevorzugt bis zu 15 Gew.-%, weiter bevorzugt bis zu 12 Gew.-%, besonders bevorzugt 0,5 bis 12 Gew.-%, bezogen auf das Gesamtgewicht des PMMI-Copolymers.

Die Säurezahl der PMMI-Copolymere, bestimmt nach DIN 53240-1:2013-06, beträgt bevorzugt 15 bis 50 mg KOH/g, weiter bevorzugt 20 bis 45 mg KOH/g, noch weiter bevorzugt 22 bis 42 mg KOH/g.

Ein ganz besonders bevorzugtes PMMI-Copolymer hat einen MMI-Anteil von 36,8 Gew.-%, einen MMA-Anteil von 51,7 Gew.-% und einen MMS+MMAH-Anteil von 11,5 Gew.-%, jeweils bezogen auf das Gesamtgewicht des PMMI-Copolymers, bestimmt mittels ¹H-NMR-Spektroskopie, und eine Säurezahl von 22,5 mg KOH/g, bestimmt nach DIN 53240-1:2013-06.

Ein alternativ ganz besonders bevorzugtes PMMI-Copolymer hat einen MMI-Anteil von 83,1 Gew.-%, einen MMA-Anteil von 13,6 Gew.-% und einen MMS+MMAH-Anteil von 3,3 Gew.-%, jeweils bezogen auf das Gesamtgewicht des PMMI-Copolymers, bestimmt mittels ¹H-NMR-Spektroskopie, und eine Säurezahl von 22,5 mg KOH/g, bestimmt nach DIN 53240-1:2013-06.

Ein ebenfalls alternativ ganz besonders bevorzugtes PMMI-Copolymer hat einen MMI-Anteil von 94,8 Gew.-%, einen MMA-Anteil von 4,6 Gew.-% und einen MMS+MMAH-Anteil von 0,6 Gew.-%, jeweils bezogen auf das Gesamtgewicht des PMMI-Copolymers, bestimmt mittels ¹H-NMR-Spektroskopie, und eine Säurezahl von 41,5 mg KOH/g, bestimmt nach DIN 53240-1:2013-06.

Geeignetes PMMI ist beispielsweise bei der Firma Evonik Industries AG unter der Marke "PLEXIMID^{®}" erhältlich.

Es ist erfindungsgemäß vorgesehen, dass der Anteil an PMMI-Copolymer C) > 0,1 Gewichts-% beträgt. Bevorzugt beträgt der Anteil an PMMI-Copolymer C) weiterhin ≤ 0,5 Gewichts-%, bezogen auf das Gesamtgewicht der Zusammensetzung. Vorzugsweise beträgt der Anteil an C) ≥ 0,2 Gewichts-% bis ≤ 0,5 Gewichts-%, bezogen auf das Gesamtgewicht der Zusammensetzung.

Bevorzugt beträgt die Glasübergangstemperatur des PMMI-Copolymers C), bestimmt gemäß DIN EN ISO 11357-2:2014-07 bei einer Aufheizrate von 20 °C/min, ≥120 °C bis ≤ 170 °C und vorzugsweise ≥ 130 °C bis ≤ 150 °C. Damit ist das PMMI-Copolymer unter den für Polycarbonat - einschließlich den für hochtemperaturstabilen Polycarbonat-Copolymeren - üblichen Verarbeitungsbedingungen stabil.

### Komponente D

Die Phosphit- und/oder Phosphin-Stabilisatoren können alleine oder als Bestandteil von Mischungen eingesetzt werden. Bevorzugt ist D) Tris-(2,4-di-tert-butylphenyl)phosphit (Irgafos^{®} 168), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36), Triphenylphosphin oder eine Mischung enthaltend wenigstens eine der vorgenannten Verbindungen.

Bevorzugt beträgt der Anteil an D) ≥ 0,01 Gewichts-% bis ≤ 0,5 Gewichts-%, bezogen auf das Gesamtgewicht der Zusammensetzung. Vorzugsweise beträgt der Gehalt ≥ 0,04 Gewichts-% bis ≤ 0,1 Gewichts-%.

Die erfindungsgemäße Zusammensetzung kann weitere übliche Additive als Komponente E wie Flammschutzmittel, Antitropfmittel, Schlagzähmodifikatoren, Antistatika, Farbmittel, Pigmente, Ruß, Gleit- und/oder Entformungsmitteln, Blendpartner, Verträglichkeitsvermittler, UV-Absorber, IR-Absorber und dergleichen enthalten.

Gemäß einer weiteren Ausführungsform enthält die Zusammensetzung die sphärischen Partikel Bb) und weist einen Koeffizienten der linearen thermischen Ausdehnung (CLTE), bestimmt gemäß DIN 53752:1980-12 und gemessen in einem Temperaturbereich von 23 - 60 °C, von ≥ 20 ppm/K bis ≤ 50 ppm/K auf. Vorzugsweise weichen die CLTE-Werte in Längsrichtung des Probenkörpers vorzugsweise nicht mehr als 4 ppm/K und mehr bevorzugt nicht mehr als 3 ppm/K von den CLTE-Werten in Querrichtung des Probenkörpers ab.

Gemäß einer weiteren Ausführungsform enthält die Zusammensetzung die Verstärkungsfasern Ba) und weist einen Koeffizienten der linearen thermischen Ausdehnung (CLTE), bestimmt gemäß DIN 53752:1980-12 und gemessen in einem Temperaturbereich von 23 - 60 °C, in derjenigen Richtung des Probenkörpers, welche der Längsrichtung der Fasern entspricht, von ≥ 10 ppm/K bis ≤ 30 ppm/K auf. Vorzugsweise beträgt der CLTE in derjenigen Richtung des Probenkörpers, welche der Querrichtung der Fasern entspricht, ≥ 50 ppm/K bis ≤ 70 ppm/K.

Gemäß einer weiteren Ausführungsform umfasst die Zusammensetzung, bezogen auf das Gesamtgewicht der Zusammensetzung: ≥ 55 Gewichts-% bis ≤ 65 Gewichts-%, bevorzugt 54,79 Gewichts-% bis 64,79 Gewichts-%, A), ≥ 35 Gewichts-% bis ≤ 45 Gewichts-% B), ≥ 0,2 Gewichts-% bis ≤ 0,5 Gewichts-% C) und ≥ 0,01 Gewichts-% bis ≤ 0,1 Gewichts-% D), wobei sich die Gewichts-%-Anteile zu ≤ 100 Gewichts-% addieren.

Vorzugsweise umfasst die Zusammensetzung, bezogen auf das Gesamtgewicht der Zusammensetzung:
A) ≥ 55 Gewichts-% bis ≤ 65 Gewichts-%, bevorzugt 54,79 Gewichts-% bis 64,79 Gewichts-%, eines Homopolycarbonats auf Basis von Bisphenol A, eines Homopolycarbonats auf Basis von 1,1-Bis-(4-hydroxyphenyl)-3,3,5-trimethylcyclohexan, eines Copolycarbonats auf Basis der Monomere Bisphenol A und 1,1-Bis-(4-hydroxyphenyl)-3,3,5-trimethylcyclohexan oder eine Mischung aus wenigstens zwei der vorgenannten Polymere,
B) ≥ 35 Gewichts-% bis ≤ 45 Gewichts-% Bb) sphärischen Quarz mit einem mittleren Durchmesser dso von ≥ 3 µm bis ≤ 5 µm und einem mittleren Durchmesser d₉₈, jeweils bestimmt nach ISO 13320:2009, von ≥ 10 µm bis ≤ 15 µm und/oder Ba) Glasfasern mit einer Schnittlänge von ≥ 2 mm bis ≤ 5 mm und einem Querschnittsverhältnis von ≥ 1:1 bis ≤ 2:1,
C) 0,2 Gewichts-% bis ≤ 0,5 Gewichts-% eines PMMI-Copolymers mit einer Glasübergangstemperatur, bestimmt gemäß DIN EN ISO 11357-2:2014-07 bei einer Aufheizrate von 20 °C/min, von ≥120 °C bis ≤ 170 °C und
D) ≥ 0,01 Gewichts-% bis ≤ 0,1 Gewichts-% Tris-(2,4-di-tert-butylphenyl)phosphit, Bis-(2,4-dicumylphenyl)-pentaerythritoldiphosphit, Bis-(2,6-di-tert-butyl-4-methylphenyl)-pentaerythritoldiphosphit, Triphenylphosphin oder eine Mischung enthaltend wenigstens eine der vorgenannten Verbindungen,
wobei sich die Gewichts-%-Anteile zu ≤ 100 Gewichts-% addieren. Weiter bevorzugt sind außer weiteren Additiven, ausgewählt aus der Gruppe der Flammschutzmittel, Antitropfmittel, Schlagzähmodifikatoren, Antistatika, Farbmittel, Pigmente, Ruß, Gleit- und/oder Entformungsmittel, Blendpartner, Verträglichkeitsvermittler, UV-Absorber, IR-Absorber keine weiteren Komponenten enthalten. Bevorzugt bestehen erfindungsgemäße Zusammensetzungen lediglich aus den Komponenten A) bis D) und ggf. Entformungsmitteln.

Die Erfindung betrifft ebenfalls eine Schichtenanordnung, umfassend eine Substratschicht und eine von der Substratschicht verschiedene, die Substratschicht wenigstens teilweise bedeckende Reflexionsschicht, wobei die Reflexionsschicht Licht im Wellenlängenbereich von 380 nm bis 750 nm wenigstens teilweise reflektiert, wobei die die Substratschicht eine erfindungsgemäße Zusammensetzung enthält. Dieses bedeutet bevorzugt, dass ein Teilbereich der Substratschicht oder aber die gesamte Substratschicht, aus der erfindungsgemäßen Zusammensetzung hergestellt ist. Bevorzugt besteht die Substratschicht aus der erfindungsgemäßen Zusammensetzung. Die Reflexionsschicht reflektiert somit sichtbares Licht, wobei Licht anderer Wellenlängen (UV, IR) nicht ausgeschlossen ist. Vorzugsweise enthält die Substratschicht oder ist die Substratschicht eine erfindungsgemäße Zusammensetzung, welche die sphärischen Partikel Bb) enthält. Weiter bevorzugt weist die Substratschicht einen Koeffizienten der linearen thermischen Ausdehnung (CLTE), bestimmt gemäß DIN 53752:1980-12, von ≥ 20 ppm/K bis ≤ 50 ppm/K auf. Noch mehr bevorzugt weichen bei der Substratschicht die CLTE-Werte in Längsrichtung eines Probenkörpers zur Bestimmung der CLTE-Werte vorzugsweise nicht mehr als 4 ppm/K und mehr bevorzugt nicht mehr als 3 ppm/K von den CLTE-Werten in Querrichtung des Probenkörpers ab.

Gemäß einer Ausführungsform der Schichtenanordnung ist die Reflexionsschicht eine Metallschicht. Es kann sich zum Beispiel um eine Aluminiumschicht oder eine Edelmetallschicht handeln. Die Schicht kann durch chemische Verfahren, insbesondere chemische Gasphasenabscheidung (CVD) oder Galvanisieren oder durch physikalische Verfahren, insbesondere physikalische Gasphasenabscheidung (PVD) oder Sputtern, aufgetragen werden.

Gemäß einer weiteren Ausführungsform der Schichtenanordnung weist die Reflexionsschicht eine Dicke von ≥ 10 nm bis ≤ 100 nm, vorzugsweise ≥ 30 nm bis ≤ 80 nm, auf.

Die Schichtenanordnung kann planar sein und somit als einfacher Spiegel dienen. Gemäß einer weiteren Ausführungsform ist jedoch die Schichtenanordnung nicht planar ausgebildet. Dann kann sie als Bündelungs- oder Zerstreuungsspiegel wirken. Die Schichtenanordnung kann zum Beispiel als Rotationsparaboloid ausgebildet sein.

Ein weiterer Gegenstand der Erfindung ist eine Beleuchtungsvorrichtung, umfassend eine Lichtquelle und einen Reflektor, wobei der Reflektor so angeordnet ist, dass wenigstens ein Teil des von der Lichtquelle ausgesandten Lichts von dem Reflektor reflektiert wird, wobei der Reflektor eine erfindungsgemäße Schichtenanordnung enthält. Ein Beispiel für solch eine Beleuchtungsvorrichtung ist ein Scheinwerfer, wie er in Kraftfahrzeugen als Frontlicht Verwendung findet.

Die Erfindung betrifft weiterhin ein Verfahren zur Herstellung eines Formkörpers, wobei eine thermoplastische Zusammensetzung unter Einwirkung von Wärme zu dem Formkörper geformt wird, wobei die thermoplastische Zusammensetzung eine erfindungsgemäße Zusammensetzung ist.

### Beispiele

Die vorliegende Erfindung wird anhand der nachfolgenden Beispiele näher erläutert, ohne jedoch darauf beschränkt zu sein.

### Polymere:

**A1:** ist ein kommerziell erhältliches Polycarbonat auf Basis von Bisphenol A mit einer MVR von 19 cm³/10 min (300 °C/1,2 kg, ISO 1133-1:2011) und einer Erweichungstemperatur (VST/B 120; ISO 306:2013) von 145°C (Makrolon^{®} 2408 von Covestro Deutschland AG). Das Molekulargewicht M_{w} betrug ca. 23.887 g/mol.

**A2:** ist ein kommerziell erhältliches Copolycarbonat auf Basis von Bisphenol A und Bisphenol TMC mit einer MVR von 18 cm³/10 min (330 °C/2,16 kg, ISO 1133-1:2011) und einer Erweichungstemperatur (VST/B 120; ISO 306:2013) von 183°C (Apec^{®} 1895 von Covestro Deutschland AG). Das Molekulargewicht M_{w} betrug ca. 27.855 g/mol.

### Füllstoffe:

**B1:** ist ein sphärisches Quarzgut der Firma Quarzwerke GmbH (50226 Frechen, Deutschland), welches unter dem Handelsnamen Amosil FW600 verfügbar ist (D₅₀ = 4 µm, D₉₈ = 13 µm, unbeschlichtet). Es handelt sich um ein gebranntes Siliciumdioxid mit einem D₁₀/D₉₀-Verhältnis von ca. 1,5/10 µm sowie einer spezifischen Oberfläche von ca. 6 m²/g, ermittelt nach DIN ISO 9277 (DIN-ISO 9277:2014-01).

**B2:** ist eine Glasfaser der Firma Nittobo (2-4-1, Kojimachi, Chiyoda-ku, Tokyo 102-8489, Japan) welche unter dem Handelsnamen CSG 3PA-830 verfügbar ist. Es handelt sich um eine Flachglas-Faser mit 3 mm Schnittlänge und einer Querschnittsverhältnis von 1.4.

### Stabilisatoren:

**C1:** ist ein kommerziell erhältliches Copolymer auf Basis von Polymethacrylmethylimid (Pleximid^{®} 8803) mit einer Erweichungstemperatur (VST/B 50; ISO 306:2013) von 130 °C.

**C2:** ist ein kommerziell erhältliches Copolymer auf Basis von Polymethacrylmethylimid (Pleximid^{®} TT50) mit einer Erweichungstemperatur (VST/B 50; ISO 306:2013) von 150 °C.

**D1:** ist ein Phosphit der Firma Adeka, welches unter dem Handelsnamen ADK-Stab-Pep36 (CAS-Nr. 80693-00-1; Bis(2,6-di-tert-butyl-4-methylphenyl)pentaerythritol-diphosphit) erhältlich ist.

**D2:** Triphenylphosphin (CAS-Nr. 603-35-0) der Firma BASF.

**D3:** ist ein Stabilisator-Gemisch (80% Irgafos168; s. D4) + 20% Irganox1076; phenolisches Antioxidans; CAS-Nr. 2082-79-3) der Firma BASF (Ludwigshafen), welches unter dem Handelsnamen Irganox B900 kommerziell erhältlich ist.

**D4:** ist ein Phosphit der Firma BASF, welches unter dem Handelsnamen Irgafos 168 (CAS-Nr. 31570-04-4) erhältlich ist.

**D5:** ist ein Phosphit der Firma Dover Chemical Corporation, welches unter dem Handelsnamen Doverphos S9228 (CAS-Nr. 154862-43-8) erhältlich ist.

### Entformungshilfsmittel:

**E1:** PETS (Pentaerythrittetrastearat)

### Herstellungsbedingungen:

**Methode A:** BUSS-Kneter, Massetemperatur: 280-300 °C, Drehzahl: 350 U/min, Durchsatz: 75 kg/h, Drehmoment: 30%, Füllstoffdosierung über den Seitenextruder.

**Methode B:** Zweiwellenextruder ZE 25 AX 40D-UTX der Firma Berstorff, Massetemperatur Extruder: 300 °C (320 °C für Polymer A2), Drehzahl Extruder: 225 U/min, Durchsatz: 20 kg/h, Drehmoment: 50-60%, Füllstoffdosierung über den Seitenextruder an Gehäuse 5 (von 9).

### Durchführung:

Zur Herstellung der Polycarbonat-Zusammensetzungen wurde entweder ein BUSS-Kneter (Methode A) oder ein Doppelschneckenextruder (Methode B) verwendet. Die Verarbeitungstemperaturen lagen je nach Aggregat zwischen 280-300 °C mit einer Drehzahl von 225 min⁻¹ bzw. 350 min⁻¹. Der eingesetzte Füllstoff wurde über einen Seitenextruder zugeführt, wobei das Polycarbonat sowie die Pulver-Vormischung, die alle weiteren Additive enthielt, über den Haupteinzug zugegeben wurden.

Die Probenkörper wurden nach ausreichender Trocknung der Granulate mittels Spritzguss bei einer Verarbeitungstemperatur der Schmelze von 290 - 330 °C, im Fall der Apec^{®} enthaltenden Formmassen von 310 - 350 °C, hergestellt.

Die CLTE-Werte wurden mittels thermomechanischer Analyse (TMA) gemäß DIN 53752:1980-12 im Bereich zwischen Raumtemperatur und 60 °C an Probekörpern der Abmessungen 10 mm x 10 mm x 4 mm bestimmt.

Molekulargewichte Mw wurden wie folgt bestimmt: Gelpermeationschromatographie, kalibriert gegen Bisphenol A-Polycarbonat-Standards, unter Verwendung von Dichlormethan als Elutionsmittel. Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30 °C. Injektionsvolumen: 100 µl. Detektion mittels UV-Detektor.

Die aufgeführten Zusammensetzungen sind fortlaufend nummeriert. Ein "V" bedeutet ein Vergleichsbeispiel und ein "E" bedeutet ein erfindungsgemäßes Beispiel.

### Compoundierung nach Methode A und anschließende Spritzgussversuche mit Phosphit/PMMI:

**Tabelle 1: Veränderungen des Molekulargewichtes von Polycarbonat, gemessen nach Compoundierung und nach Spritzguss bei unterschiedlichen Massetemperaturen. ¹Differenz zwischen Molekulargewicht von Polycarbonat vor der Compoundierung und von jeweiliger Zusammensetzung nach Spritzguss-Verarbeitung bei 330 °C. ²Gemessen an Polymersträngen nach Rheologiemessung bei 330 °C. ³Differenz zwischen Molekulargewicht von Polycarbonat vor und nach der Compoundierung.**

| **Nr.** | **V-1** | **V-2** | **V-3** | **V-4** | **E-5** | **E-6** | **V-7** | **V-8** |
|---|---|---|---|---|---|---|---|---|
| A1 | 59,5 | 59,425 | 59,325 | 59,35 | 59,35 | 59,35 | 59,475 | 59,325 |
| B1 | 40 | 40 | 40 | 40 | 40 | 40 | 40 | 40 |
| E1 | 0,4 | 0,4 | 0,4 | 0,4 | 0,4 | 0,4 | 0,4 | 0,4 |
| C1 | | | | | 0,1 | 0,2 | | |
| D1 | 0,075 | 0,15 | 0,25 | 0,25 | 0,15 | 0,05 | | |
| D2 | 0,025 | 0,025 | 0,025 | | | | 0,025 | 0,025 |
| D3 | | | | | | | 0,1 | 0,25 |
| **CLTE längs/quer (ppm/K)** | | | | | 46/48 | | | |

| **Mw (g/mol)** | | | | | | | | |
|---|---|---|---|---|---|---|---|---|
| Comp.: | 21.820 | 22.390 | 22.550 | 22.620 | 23.140 | 23.070 | 20.890 | 20.930 |
| ΔM_{w} Comp.(%)³ | 8,65 | 6,27 | 5,60 | 5,30 | 3,13 | 3,42 | 12,55 | 12,38 |
| Spritzguss: | | | | | | | | |
| 290 °C | | | 19.820 | | | 23.080 | | |
| 300 °C | | | 19.390 | | | 22.340 | | |
| 310 °C | | | 18.910 | | | 22.080 | | |
| 320 °C | | | 19.380 | | | 21.550 | | |
| 330 °C | | | 18.380 | | | 20.930 | 18.500² | 18.410² |
| ΔM_{w} SG (%)¹ | | | 23,05 | | | 12,38 | 22,55 | 22,93 |

Anhand von Tabelle 1 fällt zunächst auf, dass das Molekulargewicht von Polycarbonat mit steigendem Gehalt an D1 im Compoundierprozess weniger stark reduziert wird (Zusammensetzungen 1-3). Oberhalb von 0.15% der Komponente D1 ist jedoch kein großer Unterschied mehr zu sehen. Verzicht auf D2 als Verarbeitungsstabilisator hat keinen Einfluss auf das Molekulargewicht (vgl. V-3/V-4). Der Zusatz von C1 verringert den Molekulargewichtsabbau während der Compoundierung (vgl. E-5 mit V-2). Durch Erhöhung des C1-Gehaltes kann die Phosphit-Menge weiter reduziert werden (vgl. E-6 mit V-1). Der Einsatz eines anderen handelsüblichen Prozessstabilisators (D3) zeigt deutlich stärkeren Molekulargewichtsabbau (vgl. V-7 mit V-1 und V-8 mit V-3).

Hinsichtlich Verarbeitungsstabilität im Folgeprozess (Spritzguss) lassen sich die Unterschiede noch deutlicher zeigen. So ist Zusammensetzung E-6, welche sowohl Phosphit als auch PMMI enthält, deutlich stabiler gegenüber Molekulargewichtsabbau als Zusammensetzung V-3, die nur das Phosphit enthält. Die Stabilität zeigt sich über einen sehr weiten und für dieses Material relevanten Temperaturbereich (hohe Füllstoffmengen benötigen mehr Massetemperatur, um Fließfähigkeit zu gewährleisten).

Die Ergebnisse zeigen somit eine synergistische Wirkung von Phosphit und PMMI.

### Compoundierung nach Methode B und anschließende Spritzgussversuche mit Phosphit/PMMI:

**Tabelle 2: Veränderungen des Molekulargewichtes von Polycarbonat, gemessen nach Compoundierung und nach Spritzguss bei unterschiedlichen Massetemperaturen. ¹Differenz zwischen Molekulargewicht von Polycarbonat vor der Compoundierung und von jeweiliger Zusammensetzung nach Verarbeitung bei 330 °C. ²Differenz zwischen Molekulargewicht von Polycarbonat vor und nach der Compoundierung.**

| **Nr.** | **Mol-% Phosphor (·10⁻⁴)** | **E-9** | **E-10** | **E-11** | **E-12** | **V-13** | **V-14** | **V-15** |
|---|---|---|---|---|---|---|---|---|
| A1 | | 59,35 | 59,35 | 59,35 | 59,05 | 59,05 | 59,4 | 59,35 |
| B1 | | 40 | 40 | 40 | 40 | 40 | 40 | 40 |
| E1 | | 0,4 | 0,4 | 0,4 | 0,4 | 0,4 | 0,4 | 0,4 |
| C1 | | 0,2 | 0,2 | 0,2 | 0,2 | 0 | 0,2 | 0 |
| D1 | 1,6 | 0,05 | | | | 0,05 | 0 | 0,25 |
| D2 | 1,9 | | | | 0,05 | | | |
| D4 | 0,77 | | 0,05 | | | | | |
| D5 | 12 | | | 0,05 | | | | |

| **Mw (g/mol)** | | | | | | | | |
|---|---|---|---|---|---|---|---|---|
| Comp.: | | 23.400 | 23.500 | 23.500 | 23.400 | 23.070 | 23.180 | 23.080 |
| ΔM_{w} Comp.(%)² | | 2,04 | 1,62 | 1,62 | 2,04 | 3,42 | 2,96 | 3,38 |
| Spritzguss: | | | | | | | | |
| 290 °C | | 23.560 | 23.110 | 23.190 | 22.800 | 21.950 | 22.910 | 22.060 |
| 310 °C | | 23.000 | 22.670 | 22.890 | 22.430 | 21.480 | 22.420 | 21.580 |
| 330 °C | | 22.490 | 22.290 | 22.440 | 22.300 | 21.200 | 22.080 | 20.860 |
| ΔM_{w} SG (%)¹ | | 5,85 | 6,69 | 6,06 | 6,64 | 11,25 | 7,56 | 12,67 |

Anhand der Daten in Tabelle 2 ist zu erkennen, dass eine synergistische Wirkung von Phosphit/Phosphin und PMMI hinsichtlich Verarbeitungsstabilisierung existiert. Dies gilt für eine Reihe von verschiedenen P-basierten Thermostabilisatoren (gemessen an der molekularen Menge aktiver P-Spezies zeigt hierbei D4 die höchste Effektivität). Die Unterschiede bei einem Gehalt von 0,2 Gew-% C1 sind zwar gering, jedoch zeigt sich vor allem, dass nicht-Vorhandensein von PMMI eine deutliche Verschlechterung des ΔMw von 5,9% auf 11,3% (vgl. z.B. V-13 mit E-9) zur Folge hat. Vergleicht man die Molekulargewichte nach Extrusion, so sind diejenigen Zusammensetzungen, die sowohl Phosphit als auch PMMI enthalten, etwas weniger stark geschädigt als die Zusammensetzungen V-13 und V-14. Trotz ähnlicher prozentualer Abnahme des Mw bei V-14 ist der finale Wert bei der jeweiligen Verarbeitungstemperatur dadurch niedriger als bei den erfindungsgemäßen Zusammensetzungen. Bei Erhöhung des Phosphit-Gehaltes (V-15) zeigt sich zudem interessanterweise eine deutliche Verschlechterung gegenüber V-13.

### Untersuchung des Einflusses der PMMI-Konzentration:

**Tabelle 3: Veränderungen des Molekulargewichtes von Polycarbonat, gemessen nach Compoundierung und nach Spritzguss bei unterschiedlichen Massetemperaturen. Beispiele V-13 und E-9 sind zu Vergleichszwecken erneut aufgeführt. ¹Differenz zwischen Molekulargewicht von Polycarbonat vor der Compoundierung und von jeweiliger Zusammensetzung nach Verarbeitung bei 330 °C. ²Differenz zwischen Molekulargewicht von Polycarbonat vor und nach der Compoundierung.**

| **Zusammensetzung** | **V-13** | **V-16** | **E-9** | **E-17** | **E-18** |
|---|---|---|---|---|---|
| A1 | 59,55 | 59,45 | 59,35 | 59,05 | 59,35 |
| B1 | 40 | 40 | 40 | 40 | 40 |
| E1 | 0,4 | 0,4 | 0,4 | 0,4 | 0,4 |
| C1 | | 0,1 | 0,2 | 0,5 | |
| C2 | | | | | 0,2 |
| D1 | 0,05 | 0,05 | 0,05 | 0,05 | 0,05 |

| **Mw (g/mol)** | | | | | |
|---|---|---|---|---|---|
| Comp.: | 23.070 | 23.260 | 23.400 | 23.560 | 23.370 |
| ΔM_{w} Comp.(%)² | 3,42 | 2,62 | 2,04 | 1,37 | 2,16 |
| Spritzguss: | | | | | |
| 290 °C | 21.950 | 23.040 | 23.560 | 23.760 | 23.190 |
| 310 °C | 21.480 | 22.520 | 23.000 | 23.510 | 22.980 |
| 330 °C | 21.200 | 21.870 | 22.490 | 23.400 | 22.440 |
| ΔMw (%)¹ | 11,25 | 8,44 | 5,85 | 2,04 | 6,06 |

Anhand der Daten in Tabelle 3 ist zu erkennen, dass eine Erhöhung der Konzentration von C1/C2 eine deutliche Verbesserung hinsichtlich Verarbeitungsstabilität (ΔM_{w}) hervorruft. Bei einem PMMI-Gehalt von 0,5 Gew-% hat das Molekulargewicht des Polycarbonat-Compounds lediglich um 1% abgenommen (die optimale Obergrenze liegt also bei 0,5 Gew-%). Dieser Effekt zeigt sich auch bei Verwendung von C2 im Beispiel E-18.

### Einfluss Füllstoffmenge: + weitere Füllstoffe (Glasfaser, 30-50% SiOz); Herstellung nach Methode B:

**Tabelle 4: Veränderungen des Molekulargewichtes von Polycarbonat, gemessen nach Compoundierung und nach Spritzguss bei unterschiedlichen Massetemperaturen. Beispiel E-9 ist zu Vergleichszwecken erneut aufgeführt. ¹Differenz zwischen Molekulargewicht von Polycarbonat vor der Compoundierung und von jeweiliger Zusammensetzung nach Verarbeitung bei 330 °C. ²Differenz zwischen Molekulargewicht von Polycarbonat vor und nach der Compoundierung. ^{C}Beinhaltet 0,16 Gew.-% Ruß.*Differenz gemessen nach Spritzguss bei 320 °C Schmelzetemperatur.**

| **Zusammensetzung** | **V-19** | **E-20** | **E-21** | **E-9** | **V-22^{C}** | **V-23^{C}** | **V-24** | **E-25** |
|---|---|---|---|---|---|---|---|---|
| A1 | 69,35 | 69,35 | 64,35 | 59,55 | 54,19 | 49,19 | 59,35 | 59,35 |
| B1 | 30 | 30 | 35 | 40 | 45 | 50 | | |
| B2 | | | | | | | 40 | 40 |
| E1 | 0,4 | 0,4 | 0,4 | 0,4 | 0,4 | 0,4 | 0,4 | 0,4 |
| C1 | | 0,2 | 0,2 | 0,2 | | | | 0,2 |
| D1 | 0,25 | 0,05 | 0,05 | 0,05 | 0,25 | 0,25 | 0,25 | 0,05 |
| **CLTE längs/quer (ppm/K)** | 51/53 | | | 46/48 | 40/43 | 38/40 | | 19/60 |

| **Mw (g/mol)** | | | | | | | | |
|---|---|---|---|---|---|---|---|---|
| Comp.: | | | 23.690 | 23.400 | 23.120 | 22.670 | | |
| ΔM_{w} Comp.(%)² | | | 0,82 | 2,04 | 3,21 | 5,09 | | |
| Spritzguss: | | | | | | | | |
| 290 °C | 23.060 | 23.570 | 23.500 | 23.560 | | | 21.790 | 23.150 |
| 310 °C | 22.310 | 23.380 | 23.170 | 23.000 | | | 21.560 | 22.980 |
| 320 °C | | | | | | | 21.200 | 22.640 |
| 330 °C | 21.800 | 23.150 | 22.930 | 22.490 | 21.260 | 20.270 | 20.760 | |
| ΔMw (%)¹ | 8,74 | 3,08 | 4,01 | 5,85 | 10,99 | 15,14 | 11,25* | 5,22* |

### Effekt in Co-Polycarbonat:

**Tabelle 5: Veränderungen des Molekulargewichtes von (Co)Polycarbonat, gemessen nach Compoundierung und nach Spritzguss bei unterschiedlichen Massetemperaturen. ^{1a}Differenz zwischen Molekulargewicht von Polycarbonat vor der Compoundierung und von jeweiliger Zusammensetzung nach Verarbeitung bei 330 °C. ^{1b}Differenz zwischen Molekulargewicht von Polycarbonat vor der Compoundierung und von jeweiliger Zusammensetzung nach Verarbeitung bei 350 °C ²Die Massetemperatur bei Compoundierung betrug 320 °C. ³Differenz zwischen Molekulargewicht von Polycarbonat vor und nach der Compoundierung.**

| **ZusammenSetzung** | **E-9** | **E-29²** | **V-30** | **V-31** |
|---|---|---|---|---|
| A1 | 59,55 | 5,00 | | |
| A2 | | 54,35 | 59,55 | 59,55 |
| B1 | 40 | 40 | 40 | 40 |
| E1 | 0,4 | 0,4 | 0,4 | 0,4 |
| C1 | 0,2 | 0,2 | | |
| D1 | 0,05 | 0,05 | 0,05 | 0,25 |

| **Mw (g/mol)** | | | | |
|---|---|---|---|---|
| Comp.: | 23.400 | 26.400 | 25.730 | 25.750 |
| ΔM_{w} Comp.(%)³ | 2,04 | 5,22 | 7,63 | 7,56 |
| Spritzguss: | | | | |
| 290 °C | 23.560 | | | |
| 310 °C | 23.000 | 25.880 | 24.560 | 24.060 |
| 330 °C | 22.490 | 25.510 | 24.110 | 24.120 |
| 350 °C | | 24.670 | 23.280 | 23.710 |
| ΔMw (%)^{1a} | 5,85 | 8,88 | 13,44 | 13,41 |
| ΔMw (%)^{1b} | | 11,43 | 16,42 | 14,88 |

Der Effekt ist in A2 (Apec^{®}) ebenfalls deutlich zu erkennen. Eine Erhöhung des Gehalts an Stabilisator D1 zeigt nur bei 350 °C Verarbeitungstemperatur eine leichte Verbesserung (vgl. V-31 und V-30) des Molekulargewichtsabbaus, wobei dieser aber immer noch deutlich größer ist als bei E-29.

## Patentansprüche

1. Thermoplastische Zusammensetzung, umfassend:
A) aromatisches Polycarbonat und
B)
Ba) Verstärkungsfasern
und/oder
Bb) sphärische Partikel von Oxiden von Metallen oder Halbmetallen der 3. Hauptgruppe, 4. Hauptgruppe und/oder 4. Nebengruppe,
**dadurch gekennzeichnet, dass**
die Zusammensetzung weiterhin umfasst:
C) PMMI-Copolymer und
D) Phosphit-Stabilisator und/oder Phosphin-Stabilisator,
wobei weiterhin der Anteil an B) ≥ 35 Gewichts-% bis ≤ 60 Gewichts-% und der Anteil an C) > 0,1 Gewichts-%, jeweils bezogen auf das Gesamtgewicht der Zusammensetzung, beträgt.

2. Zusammensetzung gemäß Anspruch 1, wobei das aromatische Polycarbonat A) das Homopolycarbonat auf Basis von Bisphenol A, das Homopolycarbonat auf Basis von 1,1-Bis-(4-hydroxyphenyl)-3,3,5-trimethylcyclohexan, ein Copolycarbonat auf Basis der Monomere Bisphenol A und 1,1-Bis-(4-hydroxyphenyl)-3,3,5-trimethylcyclohexan oder eine Mischung aus wenigstens zwei der vorgenannten Polymere ist.

3. Zusammensetzung gemäß Anspruch 1 oder 2, wobei als Komponente B) Bb) sphärischer Quarz mit einem mittleren Durchmesser dso von ≥ 3 µm bis ≤ 5 µm und einem mittleren Durchmesser d₉₈, jeweils bestimmt nach ISO 13320:2009, von ≥ 10 µm bis ≤ 15 µm eingesetzt wird und/oder Ba) Glasfasern mit einer Schnittlänge von ≥ 2 mm bis ≤ 5 mm und einem Querschnittsverhältnis von ≥ 1: 1 bis ≤ 2: 1 eingesetzt werden.

4. Zusammensetzung gemäß einem der Ansprüche 1 bis 3, wobei der Anteil an C) weiterhin ≤ 0,5 Gewichts-%, bezogen auf das Gesamtgewicht der Zusammensetzung, beträgt.

5. Zusammensetzung gemäß einem der Ansprüche 1 bis 4, wobei die Glasübergangstemperatur des PMMI-Copolymers C), bestimmt gemäß DIN EN ISO 11357-2:2014-07 bei einer Aufheizrate von 20 °C/min, ≥120 °C bis ≤ 170 °C, beträgt.

6. Zusammensetzung gemäß einem der Ansprüche 1 bis 5, wobei D) Tris-(2,4-di-tert-butylphenyl)phosphit, Bis-(2,4-dicumylphenyl)-pentaerythritoldiphosphit, Bis-(2,6-di-tert-butyl-4-methylphenyl)-pentaerythritoldiphosphit, Triphenylphosphin oder eine Mischung enthaltend wenigstens eine der vorgenannten Verbindungen ist.

7. Zusammensetzung gemäß einem der Ansprüche 1 bis 6, wobei der Anteil an D) ≥ 0,01 Gewichts-% bis ≤ 0,5 Gewichts-%, bezogen auf das Gesamtgewicht der Zusammensetzung, beträgt.

8. Zusammensetzung gemäß einem der Ansprüche 1 bis 7, wobei die Zusammensetzung die sphärischen Partikel Bb) enthält und einen Koeffizienten der linearen thermischen Ausdehnung (CLTE), bestimmt gemäß DIN 53752:19080-12 und gemessen in einem Temperaturbereich von 23 - 60 °C, von ≥ 20 ppm/K bis ≤ 50 ppm/K aufweist.

9. Zusammensetzung gemäß einem der Ansprüche 1 bis 8, umfassend, bezogen auf das Gesamtgewicht der Zusammensetzung:
≥ 55 Gewichts-% bis ≤ 65 Gewichts-% A),
≥ 35 Gewichts-% bis ≤ 45 Gewichts-% B),
≥ 0,2 Gewichts-% bis ≤ 0,5 Gewichts-% C) und
≥ 0,01 Gewichts-% bis ≤ 0,1 Gewichts-% D),
wobei sich die Gewichts-%-Anteile zu ≤ 100 Gewichts-% addieren.

10. Schichtenanordnung, umfassend eine Substratschicht und eine von der Substratschicht verschiedene, die Substratschicht wenigstens teilweise bedeckende Reflexionsschicht, wobei die Reflexionsschicht Licht im Wellenlängenbereich von 380 nm bis 750 nm wenigstens teilweise reflektiert,
**dadurch gekennzeichnet, dass**
die Substratschicht eine Zusammensetzung gemäß einem der Ansprüche 1 bis 9 enthält.

11. Schichtenanordnung gemäß Anspruch 10, wobei die Reflexionsschicht eine Metallschicht ist.

12. Schichtenanordnung gemäß Anspruch 10 oder 11, wobei die Reflexionsschicht eine Dicke von ≥ 10 nm bis ≤ 100 nm aufweist.

13. Schichtenanordnung gemäß einem der Ansprüche 10 bis 12, wobei die Schichtenanordnung nicht planar ausgebildet ist.

14. Beleuchtungsvorrichtung, umfassend eine Lichtquelle und einen Reflektor, wobei der Reflektor so angeordnet ist, dass wenigstens ein Teil des von der Lichtquelle ausgesandten Lichts von dem Reflektor reflektiert wird,
**dadurch gekennzeichnet, dass**
der Reflektor eine Schichtenanordnung gemäß einem der Ansprüche 10 bis 13 enthält.

15. Verfahren zur Herstellung eines Formkörpers, wobei eine thermoplastische Zusammensetzung unter Einwirkung von Wärme zu dem Formkörper geformt wird,
**dadurch gekennzeichnet, dass**
die thermoplastische Zusammensetzung eine Zusammensetzung gemäß einem der Ansprüche 1 bis 9 ist.

## Claims

1. Thermoplastic composition, comprising:
A) aromatic polycarbonate and
B)
Ba) reinforcing fibers
and/or
Bb) spherical particles of oxides of metals or metalloids of the 3rd main group, 4th main group and/or 4th transition group,
**characterized in that**
the composition further comprises:
C) PMMI copolymer and
D) phosphite stabilizer and/or phosphine stabilizer,
wherein, furthermore, the proportion of B) is ≥ 35% by weight to ≤ 60% by weight and the proportion of C) is > 0.1% by weight, in each case based on the total weight of the composition.

2. Composition according to Claim 1, wherein the aromatic polycarbonate A) is the homopolycarbonate based on bisphenol A, the homopolycarbonate based on 1,1-bis(4-hydroxyphenyl)-3,3,5-trimethylcyclohexane, a copolycarbonate based on the monomers bisphenol A and 1,1-bis(4-hydroxyphenyl)-3,3,5-trimethylcyclohexane or a mixture of at least two of the abovementioned polymers.

3. Composition according to Claim 1 or 2, wherein employed as component B) is/are Bb) spherical quartz having an average diameter d₅₀ of ≥ 3 um to ≤ 5 um and an average diameter d₉₈, in each case determined according to ISO 13320:2009, of ≥ 10 um to ≤ 15 µm and/or Ba) glass fibers having a cut length of ≥ 2 mm to ≤ 5 mm and a cross sectional ratio of ≥ 1:1 to ≤ 2:1.

4. Composition according to any of Claims 1 to 3, wherein the proportion of C) is furthermore ≤ 0.5% by weight based on the total weight of the composition.

5. Composition according to any of Claims 1 to 4, wherein the glass transition temperature of the PMMI copolymer C) determined according to DIN EN ISO 11357-2:2014-07 at a heating rate of 20°C/min is ≥ 120°C to ≤ 170°C.

6. Composition according to any of Claims 1 to 5, wherein D) is tris(2,4-di-tert-butylphenyl)phosphite, bis(2,4-dicumylphenyl)pentaerythritol diphosphite, bis(2,6-di-tert-butyl-4-methylphenyl)pentaerythritol diphosphite, triphenylphosphine or a mixture containing at least one of the abovementioned compounds.

7. Composition according to any of Claims 1 to 6, wherein the proportion of D) is ≥ 0.01% by weight to ≤ 0.5% by weight based on the total weight of the composition.

8. Composition according to any of Claims 1 to 7, wherein the composition contains the spherical particles Bb) and has a coefficient of linear thermal expansion (CLTE) determined according to DIN 53752:19080-12 and measured in a temperature range of 23-60°C of ≥ 20 ppm/K to ≤ 50 ppm/K.

9. Composition according to any of Claims 1 to 8, comprising, based on the total weight of the composition:
≥ 55% by weight to ≤ 65% by weight of A),
≥ 35% by weight to ≤ 45% by weight of B),
≥ 0.2% by weight to ≤ 0.5% by weight of C) and
≥ 0.01% by weight to ≤ 0.1% by weight of D),
wherein the parts by % by weight sum to ≤ 100% by weight.

10. Layered arrangement comprising a substrate layer and a reflection layer distinct from the substrate layer and at least partially covering the substrate layer, wherein the reflection layer at least partially reflects light in the wavelength range from 380 nm to 750 nm,
**characterized in that**
the substrate layer contains a composition according to any of Claims 1 to 9.

11. Layered arrangement according to Claim 10, wherein the reflection layer is a metal layer.

12. Layered arrangement according to Claim 10 or 11, wherein the reflection layer has a thickness of ≥ 10 nm to ≤ 100 nm.

13. Layered arrangement according to any of Claims 10 to 12, wherein the layered arrangement is not planar.

14. Illumination apparatus comprising a light source and a reflector, wherein the reflector is arranged such that at least a portion of the light emitted by the light source is reflected by the reflector,
**characterized in that**
the reflector contains a layered arrangement according to any of Claims 10 to 13.

15. Process for producing a molded article, wherein a thermoplastic composition is molded to afford the molded article under the influence of heat,
**characterized in that**
the thermoplastic composition is a composition according to any of Claims 1 to 9.

## Revendications

1. Composition thermoplastique, comprenant :
A) un polycarbonate aromatique et
B)
Ba) des fibres de renforcement
et/ou
Bb) des particules sphériques d'oxydes de métaux ou de semi-métaux du groupe principal 3, du groupe principal 4 et/ou du sous-groupe 4,
**caractérisée en ce que**
la composition comprend en outre :
C) un copolymère de PMMI et
D) un stabilisateur de phosphite et/ou un stabilisateur de phosphine,
en outre la proportion de B) étant ≥ 35 % en poids à ≤ 60 % en poids et la proportion de C) étant > 0,1 % en poids, à chaque fois par rapport au poids total de la composition.

2. Composition selon la revendication 1, le polycarbonate aromatique A) étant l'homopolycarbonate à base de bisphénol A, l'homopolycarbonate à base de 1,1-bis-(4-hydroxyphényl)-3,3,5-triméthylcyclohexane, un copolycarbonate à base des monomères de bisphénol A et 1,1-bis-(4-hydroxyphényl)-3,3,5-triméthylcyclohexane ou un mélange d'au moins deux des polymères mentionnés précédemment.

3. Composition selon la revendication 1 ou 2, en tant que composant B) Bb), du quartz sphérique doté d'un diamètre moyen d₅₀ de ≥ 3 pm à ≤ 5 pm et d'un diamètre moyen d₉₈, à chaque fois déterminé selon la norme ISO 13320:2009, de ≥ 10 µm à ≤ 15 µm et/ou Ba) des fibres de verre dotées d'une longueur de coupe de ≥ 2 mm à ≤ 5 mm et d'un rapport de sections transversales de ≥ 1 : 1 à ≤ 2 : 1 étant utilisé (es) .

4. Composition selon l'une quelconque des revendications 1 à 3, la proportion de C) étant en outre ≤ 0,5 % en poids, par rapport au poids total de la composition.

5. Composition selon l'une quelconque des revendications 1 à 4, la température de transition vitreuse du copolymère de PMMI C), déterminée selon la norme DIN EN ISO 11357-2:2014-07 à une vitesse de chauffage de 20 °C/min, étant ≥ 120 °C à ≤ 170 °C.

6. Composition selon l'une quelconque des revendications 1 à 5, D) étant le tris-(2,4-di-tert-butylphényl)phosphite, le bis-(2,4-dicumylphényl)-pentaérythritoldiphosphite, le bis-(2,6-di-tertbutyl-4-méthylphényl)-pentaérythritoldiphosphite, la triphénylphosphine ou un mélange contenant au moins l'un des composés mentionnés précédemment.

7. Composition selon l'une quelconque des revendications 1 à 6, la proportion de D) étant ≥ 0,01 % en poids à ≤ 0,5 % en poids, par rapport au poids total de la composition.

8. Composition selon l'une quelconque des revendications 1 à 7, la composition contenant les particules sphériques Bb) et présentant un coefficient de l'élongation thermique linéaire (CLTE), déterminé selon la norme DIN 53752:19080-12 et mesuré dans un domaine de température de 23 à 60 °C, de ≥ 20 ppm/K à ≤ 50 ppm/K.

9. Composition selon l'une quelconque des revendications 1 à 8, comprenant, par rapport au poids total de la composition :
≥ 55 % en poids à ≤ 65 % en poids de A),
≥ 35 % en poids à ≤ 45 % en poids de B),
≥ 0,2 % en poids à ≤ 0,5 % en poids de C) et
≥ 0,01 % en poids à ≤ 0,1 % en poids de D),
les proportions en poids totalisant ≤ 100 % en poids.

10. Configuration de couche, comprenant une couche de substrat et une couche de réflexion différente de la couche de substrat, recouvrant au moins partiellement la couche de substrat, la couche de réflexion réfléchissant au moins partiellement la lumière dans un domaine de longueurs d'onde de 380 nm à 750 nm,
**caractérisée en ce que**
la couche de substrat contient une composition selon l'une quelconque des revendications 1 à 9.

11. Configuration de couche selon la revendication 10, la couche de réflexion étant une couche métallique.

12. Configuration de couche selon la revendication 10 ou 11, la couche de réflexion présentant une épaisseur de ≥ 10 nm à ≤ 100 nm.

13. Configuration de couche selon l'une quelconque des revendications 10 à 12, la configuration de couche étant formée de manière non plane.

14. Dispositif d'éclairage, comprenant une source de lumière et un réflecteur, le réflecteur étant agencé de telle manière qu'au moins une partie de la lumière émise par la source de lumière soit réfléchie par le réflecteur,
**caractérisé en ce que**
le réflecteur contient une configuration de couche selon l'une quelconque des revendications 10 à 13.

15. Procédé de préparation d'un corps moulé, une composition thermoplastique étant moulée en un corps moulé sous l'effet de la chaleur,
**caractérisé en ce que**
la composition thermoplastique est une composition selon l'une quelconque des revendications 1 à 9.
